# EUROPÄISCHE PATENTANMELDUNG

(11) **EP 3 786 089 A1**
(43) Veröffentlichungstag der Anmeldung: **03.03.2021**
(21) Anmeldenummer: 20168605.2
(22) Anmeldetag: 08.04.2020
(51) Int. Cl.: B65G 43/08, B65G 47/50, B65G 47/71, B65G 47/84, B65G 47/96, B07C 3/08, B65G 54/02

(54) **VORRICHTUNG UND VERFAHREN ZUM FÖRDERN UND SORTIEREN VON STÜCKGÜTERN**

(30) Priorität: 26.08.2019 EP 19193622
(71) Anmelder: Siemens Aktiengesellschaft, 80333 München (DE)
(72) Erfinder: ENENKEL, Peter, 78462 Konstanz (DE)
(74) Vertreter: Maier, Daniel Oliver

(57) **Zusammenfassung**

Die Erfindung offenbart eine Vorrichtung (2) und ein Verfahren zum Fördern und Sortieren von Stückgütern (4a-c). Die Vorrichtung (2) umfasst einen Gliederförderer (6), welcher Gliederelemente (8), Abschiebelemente (10a-c) und Antriebelemente aufweist, und eine Steuereinrichtung. Der Gliederförderer (6) läuft entlang einer Bandbewegungslinie (16) und weist entlang der Bandbewegungslinie (16) einander nachfolgend angeordnete, eine Förderfläche (18) für die Stückgüter (4a-c) ausbildende Gliederelemente (8) auf. Jeweils ein Abschiebelement (10a-c) ist auf einem der Gliederelemente (8) oberhalb der Förderfläche (18) anordenbar, so dass das Abschiebelement (10a-c) gemeinsam mit dem Gliederelement (8) entlang der Bandbewegungslinie (16) läuft, und dieses Abschiebelement (10) ist entlang einer im Wesentlichen quer zur Bandbewegungslinie (16) angeordneten Abschieblinie (20) bewegbar und anhaltbar. Die Antriebelemente treiben jeweils ein oder mehrere Abschiebelemente (10a-c) individuell an, so dass Bewegen und Anhalten dieser einander nachfolgend angeordneten Abschiebelemente (10a-c) voneinander unabhängig ist.

## Beschreibung

Die vorliegende Erfindung betrifft das technische Gebiet einer Fördervorrichtung zum Sortieren von Stückgütern.

Durch die starke Zunahme des Versandhandels gab es im Mixed-Mail-Bereich eine starke Zunahme des Sendungsvolumens insgesamt und an Sendungen unterschiedlicher Größe, denn bedingt durch die Zunahme des automatisierten Versands gibt es immer weniger Konsolidierung versendeter Güter. Die Zuwachsraten für das Aufkommen von Kleingutsendungen werden in den nächsten Jahren mit über 20 Prozent pro Jahr abgeschätzt. Im Wesentlichen handelt es sich hierbei um B2C E-Commerce Päckchen mit sehr heterogenen und lageinstabilen Verpackungen. Insgesamt wird ein Anteil im Stückgutaufkommen von über 50 Prozent prognostiziert. Häufig sind diese Kleingutsendungen mangelhaft verpackt (beweglicher Schwerpunkt innerhalb der Verpackung, empfindliches Verpackungsmaterial, ...), so dass eine unsanfte Behandlung die Gefahr von Beschädigung des Stückguts, seiner Verpackung und der Fördervorrichtung erhöht.

Eine effiziente, gutschonende und - um Erweiterungen bestehender Sortierzentren zu vermeiden - zudem möglichst platzsparende Durchführung von Sortierprozessen ist von hoher Bedeutung für die Effizienz und Zuverlässigkeit der gesamten Versandkette.

Ein bekanntes Sortiersystem, das durch einen Formschluss ein sicheres Abgeben inhomogener Ware an Endstellen ermöglicht, ist der Schuhsorter. Aktuelle Schuhsorter sind bisher reine Linearsorter mit einem Rücklauf auf der Unterseite und sind weder raum-, noch kurvengängig. Daher ist die Anzahl der Endstellen sehr begrenzt.

Ein typischer Schuhsorter umfasst ein umlaufendes Förderband, welches in einer Hauptförderrichtung hintereinander angeordnete Segmente aufweist. Schuhsorter sind Linearförderer. Auf jedem Segment ist jeweils ein kulissengeführtes Abschiebelement ("Schuh") quer zur Hauptförderrichtung beweglich angebracht um Güter seitlich auszuschleusen. Eine im Förderrahmen unter dem Förderband angeordnete Spurführungsanordnung führt die Abschiebeelemente von einer Seite auf die andere Seite über das Förderband wenn das Förderband in Förderrichtung angetrieben wird. Hierzu weisen die Abschiebeelemente unter der Förderfläche Stifte auf, die weichenartig in die Spurführungsanordnung eingefädelt werden. Die Abschiebelemente werden von dem Förderband selber angetrieben und die Sendungslänge bestimmt, wie viele Abschiebeelemente weichenartig von der Spurführungsanordnung abgelenkt werden. Hintereinander angeordnete Schuhe laufen daher gänsemarschartig hintereinander diagonal um ein Gut seitlich auszuschleusen. Für jede Endstelle muss es eine Spurführungsanordnung geben.

Alternativ ist es auch möglich, kleinere Segmente und Abschiebeelemente zu realisieren und mehrere Spurführungsanordnungen je Endstelle vorzusehen, so dass alle einer Endstelle zugeordneten Abschiebelemente zeitgleich quer bewegt werden, so dass keine Verdrehung des auszuschleusenden Guts auftritt. Für jede Endstelle muss es dann mehrere Spurführungsanordnungen geben.

Im Zuge der Automatisierung der Sortierprozesse wird eine Vollautomatisation des Prozesses auf möglichst viele Endstellen angestrebt (One Touch). Will man hierzu einen mehrstufigen bzw. sequenziellen und somit durchsatzmindernden Sortierprozess vermeiden, müssen hierzu sehr viele Endstellen auf kleinstem Raum realisiert werden können. Dies ist wiederum nur durch Systeme zu erreichen, die eine Anordnung der Endstellen und der Fördertechnik über mehrere Ebenen auf kleiner Fläche ermöglichen und somit raumgängig sind.

Die existierenden Lösungen sind unflexibel, da die Art und Anzahl der Spurführungsanordnung die Anzahl an Endstellen bestimmt. Somit kann die Anzahl an Endstellen nicht flexibel an eine spezifische Sortiersituation angepasst werden. Die Abschiebelemente von Schuhsortern können nur stetig von einer Seite auf die andere Seite des Förderbandes bewegt werden. Die Bewegungen der Schuhe von pingesteuerten Schuhsortern können nur an bestimmten Punkten ausgelöst werden, ein Anhalten eines Schuhs mittig auf der Förderfläche ist nicht möglich. Förderer mit separat ansteuerbaren Fördersegmenten (Kugelrollenförderer o.ä.) sind für Kleingutsendungen nicht geeignet, da diese aufgrund ihrer Inhomogenität nicht genügend gleichmäßig auf deren Förderfläche aufliegen, um kontrolliert bewegt werden zu können.

Der vorliegenden Erfindung liegt daher die Aufgabe zugrunde, eine verbesserte Förder- und Sortiervorrichtung bereitzustellen. Gelöst wird diese Aufgabe durch eine Vorrichtung und ein Verfahren mit den Merkmalen der unabhängigen Ansprüche.

Die erfindungsgemäße Lösung betrifft eine Vorrichtung zum Fördern und Sortieren von Stückgütern umfassend einen Gliederförderer, welcher Gliederelemente, Abschiebelemente und Antriebelemente aufweist, und eine Steuereinrichtung. Der Gliederförderer ist ausgestaltet, entlang einer Bandbewegungslinie zu laufen und weist entlang der Bandbewegungslinie einander nachfolgend angeordnete, eine Förderfläche für die Stückgüter ausbildende Gliederelemente auf. Jeweils ein Abschiebelement ist auf einem der Gliederelemente oberhalb der Förderfläche anordenbar, so dass das Abschiebelement gemeinsam mit dem Gliederelement entlang der Bandbewegungslinie läuft, und dieses Abschiebelement entlang einer Abschieblinie, welche auf dem Gliederelement in einem Winkel, insbesondere im Wesentlichen quer zur Bandbewegungslinie zwischen einer ersten und einer zweiten Seite des Gliederelements angeordnet ist, bewegbar und anhaltbar ist. Die Antriebelemente sind ausgestaltet, jeweils ein oder mehrere Abschiebelemente individuell anzutreiben, wobei mindestens zwei entlang der Bandbewegungslinie einander nachfolgend angeordnete Abschiebelemente von unterschiedlichen Antriebelementen antreibbar sind, so dass Bewegen und Anhalten dieser einander nachfolgend angeordneten Abschiebelemente voneinander unabhängig ist. Die Steuereinrichtung ist ausgestaltet zur Ansteuerung des Laufens des Gliederförderers und der Antriebelemente.

Vorteilhafte Ausgestaltungen der Erfindung ergeben sich aus den Unteransprüchen.

Unter einer Anordnung des Abschiebelements oberhalb der Förderfläche soll verstanden werden, dass der mit dem Stückgut in Berührung kommende Teil des Abschiebelements oberhalb der Förderfläche angeordnet ist, eine Ausdehnung unterhalb der Förderfläche zur Führung, zum Antrieb und/oder zur Befestigung des Abschiebelements ist selbstverständlich möglich.

Die Gliederelemente erstrecken sich jeweils über eine Breite des Gliederförderers. Die Bandbewegungslinie beschreibt den Förderweg des Gliederförderers. Wenn der Gliederförderer ein reiner Linearförderer ohne Kurven ist, handelt sich um eine einzige Transportrichtung, andernfalls um mehrere.

Das entlang der Breite des Gliederförderers, zwischen der ersten und zweiten Seite des Gliederelements bewegbare Abschiebelement kann schienenartig entlang der Abschieblinie seines zugehörigen Gliederelements bewegbar sein. Bei einem reinen Linearförderer sind bei gleichartigen Gliederelementen daher alle Abschieblinien parallel zueinander, bei kurvenbeschreibenden Gliederförderer sind typischerweise Abschieblinie und Bandbewegungslinie tangential zueinander.

Wenn der Gliederförderer entlang der Bandbewegungslinie läuft, laufen die Gliederelemente gemeinsam mit ihren Abschiebelementen und Antriebelementen, wobei ein Ansteuern eines Antriebelements eine Ansteuerung des zugehörigen Abschiebelements bewirkt und so die Abschiebelemente zusätzlich zu ihrer Bewegung entlang der Bandbewegungslinie entlang ihrer Abschieblinie bewegt werden können.

Die einzelnen Abschiebelemente können an jeder Position entlang ihrer Abschieblinie auf dem Gliederelement individuell angesteuert angehalten werden. Einander nachfolgende Abschiebelemente sind individuell ansteuerbar. Die Antriebelemente sind ansteuerbar mit einem oder mehreren autonom ansteuerbaren Antrieben, typischerweise treibt jedoch ein Antriebelement nur ein Gliederelement an. Die Steuereinrichtung ist auch zum Ansteuern aller Elemente der Vorrichtung ausgestaltet.

Die Abschiebelemente können autonom individuell selektiv bewegt werden und es kann jede beliebige Kulisse gefahren werden. Die Abschiebelemente können zusammengefasst oder individuell bewegt werden, so dass die Bewegungsabfolge komplett individualisiert bestimmt werden kann. Der Gliederförderer kann Kurven fahren, in denen die Stückgüter auch ausgeschossen werden können und ist zudem höhengängig. Die Höhengängigkeit ermöglicht einen Transport über mehrere Ebenen und verbraucht somit weniger Fläche, ohne dass Lifte, Rolltreppen o.ä. erforderlich sind.

Die erfindungsgemäße Lösung kann durch verschiedene, jeweils für sich vorteilhafte und, sofern nicht anders ausgeführt, beliebig miteinander kombinierbare Ausgestaltungen weiter verbessert werden. Auf diese Ausgestaltungsformen und die mit ihnen verbundenen Vorteile wird im Folgenden eingegangen.

Gemäß einer Ausführungsform können die Gliederelemente auf einer zwischen ihrer ersten und zweiten Seite, vorzugsweise im Wesentlichen mittig, angeordneten Führungsschiene oder seitlich auf zwei entlang der Bandbewegungsrichtung angeordneten Führungsschienen gelagert sein. Eine mittige bzw. zentrale Anordnung läuft entlang der Bandbewegungslinie.

Um auch bei Kurven des Gliederförderers eine durchgängige Förderfläche ohne Löcher kann zu erzielen, können einander nachfolgend angeordnete Gliederelemente hintereinander angeordnet und/oder gleitend einander überlappend, insbesondere schäftungsartig, und/oder ineinander greifend ausgestaltet werden. Durch ein schäftungsartiges Abschrägen der Gliederelemente in einen spitzen Winkel kann die Förderfläche auch bei Überlappen der Gliederelemente, selbst in Kurven, relativ eben und mit nur sehr geringen Störkonturen realisiert werden. Um ein gleitendes Überlappen, Kurvenfahrten oder trumartiges Umlaufen der Gliederelemente zu ermöglichen, werden benachbarte Gliederelemente ohne Fixierung ihrer Kontaktfläche miteinander ausgestaltet.

Gemäß einer Ausführungsform können die Abschiebelemente und die Gliederelemente ausgestaltet sein, nutenführungsartig und/oder umgriffführungsartig ineinander zu greifen. Hierdurch, insbesondere durch Kombination, wird eine noch stabilere Ausgestaltung des Gliederförderers und eine erhöhte Stabilität der Förderfläche erzielt, was insbesondere bei langen Glieder- und Abschiebelementen sowie schweren Stückgütern relevant ist. Bei einer Nutenführung weist das Gliederelement einen Schlitz längs der Abschieblinie zur Einfügung und Führung des Abschiebelements auf. Bei einer Umgriffführung umschließt das Abschiebelement sein Gliederelement seitlich ganz oder teilweise.

Um auch bei auf den betreffenden Gliederelementen aufliegendem Stückgut eine hohe Flexibilität in Bewegung und Positionierung der Abschiebelemente zu ermöglichen, können die Abschiebelemente auf Höhe oder unterhalb der Förderfläche absenkbar ausgestaltet sein. Dies kann auf einfache Weise erreicht werden durch ein Umlaufen der Abschiebelemente auf ihren Gliederelementen ober- und unterhalb der Förderfläche.

Die Antriebelemente können als Linearantriebe ausgestaltet sein, vorzugsweise umfassend eine Spindel, die ausgestaltet ist bei ihrer Drehung das Abschiebelement entlang der Abschieblinie des Gliederelements zu bewegen. Hierbei kann das Abschiebelement als ein Rotor auf dem Linearantrieb bzw. - motor ausgestaltet sein, wobei der Linearmotor als entlang der Abschieblinie angeordnete Schiene für das Abschiebelement agieren kann. Die Antriebsart ist nicht auf einen Linearantrieb beschränkt, es sind viele weitere Antriebsarten möglich wie schraubgetriebenes Kugelgewindetrieb, Rollengewindetrieb mit Rollenrückführung, Planetenrollengewindetrieb, Trapezgewindetrieb, Steilgewindetrieb, hydrostatischer Gewindetriebe, Linearmotor, Pneumatikzylinder, Hydraulikzylinder, Zahnstangenantriebe, Kurbelschlaufe, Kurvenscheibe, ....

Damit die Abschiebelemente auch bei voller Fahrt und/oder schweren Stückgüter an ihrer angehaltenen Position verharren, können die Abschiebelemente arretierbar ausgestaltet sein. Ein konzertiertes Arretieren mehrerer um ein Stückgut positionierter Abschiebelemente klemmt dieses Stückgut während des Transports des Gliederförderers ein, so dass keine unerwünschten Positionsänderungen des Stückguts, aber auch der Abschiebelemente selber durch Rutschen, Gleiten o.ä. erfolgen. Dies ist insbesondere bei Kurvenfahrten relevant.

Gemäß einer Ausführungsform kann die Steuereinrichtung ausgestaltet sein zur Ansteuerung der Vorrichtung, insbesondere der Abschiebelemente, in Antwort auf Position und Bewegung der Gliederelemente, der Abschiebelemente und der Stückgüter.

Hinsichtlich eines Verfahrens wird die vorstehend genannte Aufgabe gelöst durch ein Verfahren zum Fördern und Sortieren von Stückgütern umfassend die Verfahrensschritte:
Auflage eines Stückguts auf einem oder mehreren entlang einer Bandbewegungslinie einander nachfolgend angeordneten, eine Förderfläche für die Stückgüter ausbildenden Gliederelementen eines Gliederförderers, wobei auf jeweils einem Gliederelement ein Abschiebelement oberhalb der Förderfläche anordenbar ist.
Laufen des Gliederförderers entlang der Bandbewegungslinie. Individuell angesteuertes Bewegen und Anhalten eines oder mehrerer Abschiebelemente entlang einer jeweiligen Abschieblinie, wobei die Abschieblinie auf dem jeweiligen Gliederelement in einem Winkel, insbesondere im Wesentlichen quer zur Bandbewegungslinie zwischen einer ersten und zweiten Seite des Gliederelements angeordnet ist und wobei mindestens zwei entlang der Bandbewegungslinie einander nachfolgend angeordnete Abschiebelemente voneinander unabhängig ansteuerbar sind.

Die Abschiebelemente werden bewegt, um ein Stückgut entlang der Abschieblinie zu schieben, um die Abschiebelemente in Erwartung eines auf den Gliederförderer aufzubringenden Stückguts vorzupositionieren und/oder um ein oder mehrere Abschiebelemente hin zu einem bereits auf der Förderfläche des Gliederförderers aufliegenden Stückgut zu bewegen. Die Bewegung eines Abschiebelements kann entlang der gesamten Abschieblinie angehalten werden.

Das Verfahren weist, soweit übertragbar, die gleichen Vorteile auf, welche bezüglich des vorgestellten Verfahrens aufgeführt sind.

Gemäß einer Ausführungsform kann das Verfahren zudem folgende Verfahrensschritte umfassen. Erfassen von Position und/oder Form des Stückguts auf der Förderfläche. Ansteuern des Laufens des Gliederförderers entlang der Bandbewegungslinie und/oder des Bewegens und Anhaltens der Abschiebelemente in Antwort auf die erfasste Position und/oder Form des Stückguts. So kann flexibel auf die Beladung des Gliederförderers reagiert werden, ohne dass zuvor genaue Positionierung, Ausmaße etc. der Stückgüter bekannt sein müssen und es kann auf unerwartete Positionsänderungen flexibel reagiert werden.

Gemäß einer weiteren Ausführungsform kann das Anhalten eines oder mehrerer Abschiebelemente erfolgen, solange das Stückgut noch auf dem oder den Gliederelementen dieses oder dieser Abschiebelemente aufliegt. Dies erlaubt das Umrahmen eines Stückguts während des Transports und/oder das Vorpositionieren eines Stückguts auf der Förderfläche vor einem endgültigen Abschieben von dem Gliederförderer. So können sehr viel höhere Ausschussgeschwindigkeiten bei gleichzeitiger Gutschonung erzielt werden.

Gemäß einer weiteren Ausführungsform kann ein gegenläufiges Bewegen der Abschiebelemente einander nachfolgend angeordneter Gliederelemente hin zu einem auf diesen Gliederelementen aufliegenden Stückgut und Anhalten dieser Abschiebelemente erfolgen, so dass ein Stückgut anschließend von diesen Abschiebelementen in seiner Bewegung eingeschränkt ist.

Um ein Stückgut auf der Förderfläche zu positionieren, auszurichten und/oder von dem Gliederförderer auszuschießen, kann ein Bewegen eines Stückguts entlang der Abschieblinie durch ein oder mehrere Abschiebelemente erfolgen. Je mehr Abschiebelemente in Kontakt mit einem Stückgut sind, also je kleiner die Teilung des Gliederförderers bzw. je kleiner die Abschiebelemente und die Breite der Gliederelemente in Relation zu dem Stückgut ist, umso genauer kann ein Stückgut ausgerichtet, positioniert und umso stabiler kann ein Stückgut eingeklemmt werden.

Gemäß einer weiteren Ausführungsform kann ein Arretieren eines Abschiebelements erfolgen. Das Arretieren erfolgt nach dem Anhalten von diesem einen Abschiebelement. Ein arretiertes Abschiebelement agiert als Stopper, wenn ein Stückgut umrahmende Abschiebelemente arretiert werden, klemmen sie dieses Stückgut fest ein.

Gemäß einer weiteren Ausführungsform kann ein Absenken eines Abschiebelements auf Höhe oder unterhalb der Förderfläche erfolgen. So kann ein zuvor von mehreren Abschiebelementen eingeklemmtes Stückgut auf derjenigen Seite, auf der das Abschiebelement abgesenkt wird, ungestört abgeschoben werden, auch wenn zuvor auf ebendieser Seite ein Abschiebelement positioniert war. Oder es kann ein Stückgut von mehreren Abschiebelementen umrahmt werden, auch wenn zuvor bei bereits auf der Förderfläche aufliegendem Stückgut alle Abschiebelemente auf einer Seite angeordnet waren.

Ausführungsformen der Erfindung werden nachfolgend anhand der Figuren beispielsweise näher erläutert. Dabei zeigen:
- Figur 1: eine Vorrichtung mit Endstellen und einen Gliederförderer mit einer Kurve;
- Figur 2: Führungsmöglichkeiten der Abschiebelemente;
- Figur 3: auf einem Gliederförderer aufliegende Stückgüter mit jeweils unterschiedlich positionierten Abschiebelementen; und
- Figur 4: schäftungsartig ausgestaltete Gliederelemente im Querschnitt.

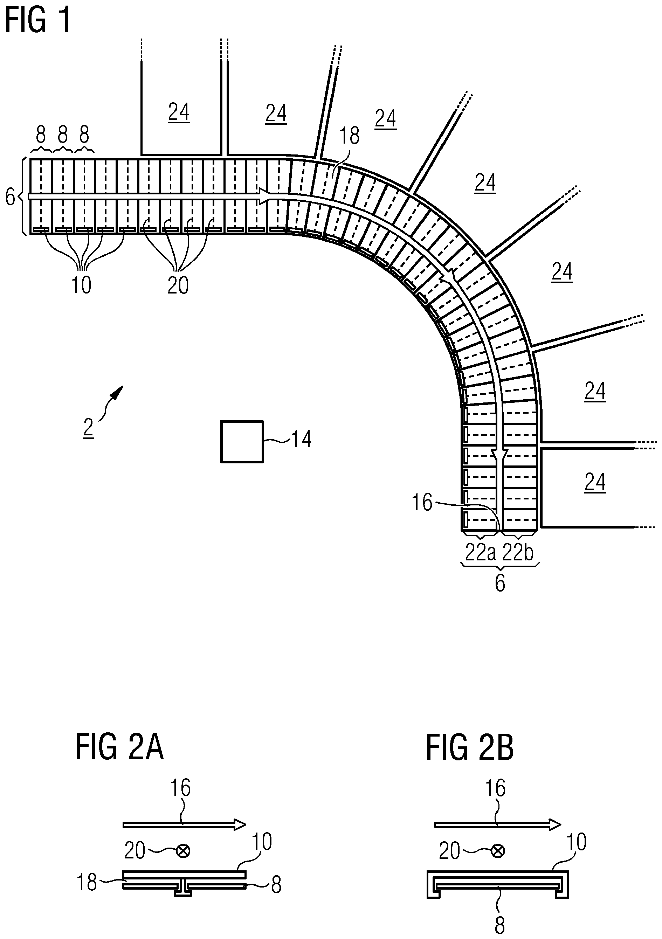

Figur 1 zeigt in Aufsicht eine Vorrichtung 2 zum Fördern und Sortieren von (in Figur 1 nicht dargestellten) Stückgütern 4. Die Vorrichtung 2 umfasst einen Gliederförderer 6 mit einer eine Kurve beschreibenden Bandbewegungslinie 16 als Haupttransportrichtung und umfassend entlang der Bandbewegungslinie 16 einander nachfolgend angeordnete Gliederelemente 8, die eine Förderfläche 18 ausbilden. Die Gliederelemente 8 überlappen einander, so dass sie in Kurven übereinander gleiten können. Anstatt einander zu überlappen, können die Gliederelemente 8 auch anderweitig ineinander greifen. Daher kann der Gliederförderer 6 Kurven, Drehungen und Steigungen fahren, ohne dass auf der Förderfläche 18 Löcher entstehen, durch die die Stückgüter 4 oder andere kleine Teile durchfallen können oder die Störkonturen darstellen.

Jedes Gliederelement 8 weist eine Abschieblinie 20 und ein eigenes, auf diesem Gliederelement 8 angeordnetes Abschiebelement 10 auf. Die Abschiebelemente 10 werden über ihnen zugeordnete autonom ansteuerbare Antriebelemente 12 angetrieben und können individuell angesteuert auf dem Gliederelement 8 zwischen ihren beiden Seiten 22a, 22b entlang ihrer Abschieblinie 20 bewegt, angehalten und vorzugsweise auch arretiert werden. Unter einer autonomen Ansteuerbarkeit soll verstanden werden, dass alle, oder zumindest einander entlang der Bandbewegungslinie 16 einander nachfolgend angeordnete Abschiebelemente 10 voneinander unabhängig bewegt und angehalten werden können. Vorzugsweise weist dazu jedes Abschiebelement 10 ein eigenes Antriebelement 12 auf.

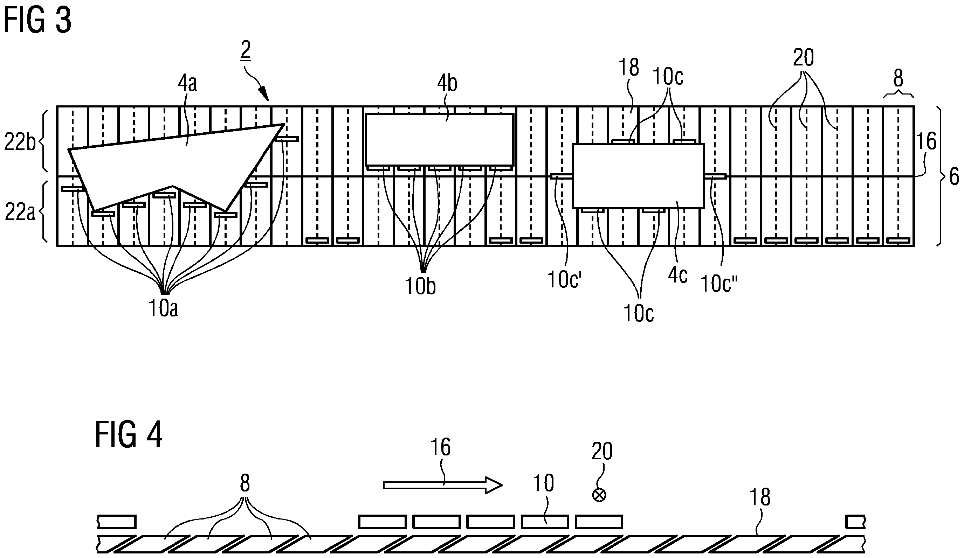

Die Abschiebelemente 10 können also sowohl an jeder Position entlang der Abschieblinie 20, als auch komplett voneinander unabhängig bewegt, angehalten und vorzugsweise auch arretiert werden. Die Bewegungsmöglichkeiten der Abschiebelemente 10 sind nicht auf bestimmte Punkte entlang der Bandbewegungslinie 16 beschränkt. So ist eine hohe Flexibilität möglich. Mehrere Abschiebelemente 10a können an die Konturen eines Stückguts 4a (Figur 3) angepasst positioniert werden, dieses Stückgut 4 ausrichten und anschließend oder zugleich entlang der Abschieblinie 20 bewegen. Auch in Kurven des Gliederförderers 6 können Stückgüter ausgeschossen und/oder manipuliert werden. Der Abstand zwischen einander nachfolgenden Stückgütern 4 ist im Gegensatz zu anderen Sortiersystemen unabhängig von der Gutgröße und kann individuell gewählt werden. Es ist möglich, ein Stückgut 4 während des Transports entlang der Bandbewegungslinie 16 zunächst einmal mit den Abschiebelementen 10 vorzupositionieren (hin zum Rand der Förderfläche 18 wie das Stückgut 4b in Figur 3 und/oder hinsichtlich seiner Ausrichtung, sinnvoll beispielsweise für das Stückgut 4a in Figur 3), dann werden die Abschiebelemente 10 angehalten, evtl. auch arretiert bevor das Stückgut 4 von den Abschiebelementen 10 seitlich in eine der direkt an den Gliederförderer 6 anschließenden Endstellen 24 ausgeschossen wird. Um das vorpositionierte Stückgut 4 auszuschießen, werden alle mit diesem Stückgut 4 in Kontakt stehenden Abschiebelemente 10 zugleich und konzertiert bewegt. Durch das Vorpositionieren sind höhere Ausschussgeschwindigkeiten bei dennoch sehr präzisem und gutschonendem Auswurf möglich, da das vorpositionierte Stückgut nur über eine kurze Strecke beschleunigt und bewegt werden muss. All dies ermöglicht einzeln oder in Kombination eine besonders hohe Kapazität der Vorrichtung 2.

Die Ausrichtung der Gliederelemente 8 bestimmt den Winkel zwischen Abschieblinie 20 und Bandbewegungslinie 16. In Figur 1 sind diese im Wesentlichen quer zueinander angeordnet, aber auch andere Winkel (die vorzugsweise für alle Gliederelemente 8 übereinstimmen) sind möglich.

Die Vorrichtung 2 umfasst eine Steuereinrichtung 14 zur Ansteuerung des Gliederförderers 6, der Abschiebelemente 10 und ihrer Antriebelemente 12. Die Vorrichtung 2 weist gemäß einer bevorzugten Ausführungsform zudem Arretiervorrichtungen auf zum Arretieren angehaltener Abschiebelemente 10. Die Arretiervorrichtungen können von den Antriebelementen 12 umfasst sein oder separat ausgestaltet sein. Bei einem als Spindel ausgestaltetem Antriebelement 12 kann das Arretieren besonders einfach realisiert werden. Zur Realisierung der Antriebelemente 12 kann auf unterschiedlichste Antriebsmöglichkeiten zurückgegriffen werden. Entscheidend ist einzig, dass die gewählten Antriebe zum individuellen Antrieben und Anhalten der Bewegung der Abschiebelemente 10 auf ihren Gliederelementen 8 ausgestaltet sind, wobei das Anhalten vorzugsweise an jeder Position entlang der Abschieblinie 20 möglich sein sollte. Eine möglichst präzise Ansteuerbarkeit ist vorteilhaft, ebenso wie eine schnelle Beschleunigung, damit die Abschiebelemente 10 auch bei hohen Geschwindigkeiten des Gliederförderers 6 präzise ausschleusen können. Die Antriebelemente 12 müssen gemeinsam mit ihren Gliederelementen 8 entlang der Bandbewegungslinie 16 laufen können. Vorzugsweise weist jedes Abschiebelement 10 sein eigenes Antriebelement 12 auf. Allenfalls ist es noch möglich, dass ein Antriebelement 12 mehrere, sich in relativer Nähe zueinander befindliche Abschiebelemente 10 ansteuert, wobei mindestens zwei hintereinander entlang der Bandbewegungslinie 16 angeordnete Abschiebelemente 10 von unterschiedlichen Antriebelementen 12 antreibbar sind.

Gemäß einer weiteren Ausführungsform ist die Steuereinrichtung 14 zudem ausgestaltetet, Position und Ausrichtung der Stückgüter 4 auf der Vorrichtung 2 sowohl von einer Detektionsvorrichtung und/oder anhand von Berechnungen bei bekannter Startposition und -ausrichtung auf der Vorrichtung 2 zu erfassen und in Antwort darauf die Vorrichtung 2 anzusteuern. Auch die Lage der Abschiebelemente 10 muss der Steuereinrichtung 14 bekannt sein (entweder nachvollziehbar anhand von Berechnungen und/oder Detektoren) und/oder anhand von Rückmeldungen. Die Steuereinrichtung 14 kennt gewählte Referenzpunkte für eine Bestimmung der Abwurfpositionen.

Der Gliederförderer 6 läuft auf einer Führung, die insbesondere schienenartig ausgestaltet ist. Gemäß einer weiteren Ausführungsform wird der Gliederförderer 6 von einer zentralen, mittig angeordneten Führung, im Wesentlichen entlang der Bandbewegungslinie 16 gehalten. So sind Faltungen und Biegungen des Gliederförderers 6, Kurvenfahrten etc. konstruktiv besonders einfach zu realisieren. Aber auch andere Führung, beispielsweise eine beidseitige eisenbahnschienenartige Führung, sind möglich.

Gemäß einer weiteren Ausführungsform ist der Vorrichtung 2 eine Vereinzelungsvorrichtung zur Vereinzelung der Stückgüter 4 vorgeschaltet, so dass sich auf einem Gliederelement 8 nicht zwei Stückgüter 4 zugleich befinden.

Die Dimensionierung der Gliederelemente 8 und der Abschiebelemente 10 in Relation zu den Stückgütern 4 bestimmt die mögliche Präzision bei einer an die Kontur der Stückgüter 4 angepassten Positionierung der Abschiebelemente 10, beim Vorpositionieren und beim Ausschießen. Zudem bestimmt diese Dimensionierung auch den Mindestabstand einander nachfolgender Stückgüter 4 und somit die Kapazität der Vorrichtung 2.

Figur 2 zeigt Führungsmöglichkeiten der Abschiebelemente 10 gemäß weiteren Ausführungsformen. Bei einer Nutenführung (Figur 2a) entlang der Abschieblinie 20 weist das Gliederelement 8 einen Schlitz längs der Abschieblinie 20 zur Einfügung und Führung des Abschiebelements 10 auf und wird schienenartig geführt. Insbesondere bei einer Ausgestaltung des Antriebelements 12 als Linearmotor wird der Schlitz von einer Schiene ausgefüllt und das Abschiebelement 10 befindet sich auf dem Rotor.

Bei einer Umgriffführung (Figur 2b) umschließt das Abschiebelement 10 sein Gliederelement seitlich.

Die Abschiebelemente 10 können vollkommen frei geformt und ausgestaltet werden, vorzugsweise werden sie formschlüssig mit den Gliederelementen 8 und/oder den für die Vorrichtung 2 vorgesehenen Stückgütern 4 ausgestaltet.

Figur 3 zeigt auf einem Gliederförderer aufliegende Stückgüter 4a, 4b, 4c mit jeweils unterschiedlich positionierten Abschiebelementen 10 gemäß weiteren Ausführungsformen.

Die Abschiebelemente 10a werden hin zu dem unregelmäßig geformten Stückgut 4a bewegt, so dass dieses von allen Abschiebelementen 10a ausgeschossen werden kann. Auch eine vorherige Veränderung der Ausrichtung durch eine individuelle Ansteuerung der Abschiebelemente 10a ist möglich.

Das Stückgut 4b wurde von den Abschiebelementen 10b hin zum Rand 2b des Gliederförderers 6 bewegt und entlang diesem Rand 2b ausgerichtet. Zu einem späteren Zeitpunkt wird das Stückgut 4b seitlich ausgeschleust werden - hin zu einer Endstelle 24 oder einem weiteren Förderer.

Das Stückgut 4c wurde von den Abschiebelementen 10c, 10c' umrahmt und eingeklemmt, so dass auch bei schnellem Laufen des Gliederförderers 6 und bei Kurvenfahrten die Position des Stückguts 4c stabil bleibt. Für das Umrahmen durch die Abschiebelemente 10c, 10c' werden diese entweder vor Aufbringen des Stückguts auf die Förderfläche beidseitig auf die erste und zweite Seite 22a, 22b des Gliederförderers 6 positioniert und dann durch gegenläufiges Bewegen der Abschiebelemente 10c hin zum Stückgut 4c bewegt. Für ein seitliches Ausschießen ist ein Abtauchen der auf der Ausschussseite angeordneten Abschiebelemente 10c auf Höhe oder unterhalb der Förderfläche 18 erforderlich. Einfach realisierbar ist dies, indem die Abschiebelemente 10 um das Gliederelement 8 umlaufen können. Wenn die Abschiebelemente 10 das Gliederelement 8 entlang der Abschieblinie 20 umlaufen können, ist auch ein Vorpositionieren der Abschiebelemente 10 vor dem Aufbringen auf die Gliederelemente 8 nicht erforderlich, kann aber dennoch vorteilhaft sein (die Vorpositionierung ermöglicht eine schnellere Positionierung der Abschiebelemente 10, ...).

Die Abschiebelemente 10 werden typischerweise angesteuert, bewegt, angehalten und/oder arretiert während der Gliederförderer 6 entlang der Bandbewegungslinie 16 läuft und die Stückgüter 4 somit entlang der Bandbewegungslinie 16 transportiert werden. Die Laufgeschwindigkeit des Gliederförderers 6 kann von der Steuereinrichtung 14 angesteuert und verändert werden, bis hin zum Anhalten des Gliederförderers 6.

Figur 4 zeigt gemäß einer Ausführungsform schäftungsartig ausgestaltete Gliederelemente 8 im Querschnitt. Einige Abschiebelemente 10 sind vor, andere hinter der Bildfläche angeordnet. Durch das schäftungsartige Anschrägen der Gliederelemente 8 bilden die Übergänge zwischen den Gliederelementen 8 auch in Kurven keine großen Störkonturen und die Förderfläche 18 bleibt relativ eben. Damit die Flexibilität des Gliederförderers 6 weiter möglich bleibt, überlappen die Gliederelemente 8 einander nur, allerdings ohne feste Fixierung der Kontaktflächen einander berührender Gliederelemente, da diese Kurven und ober- und untertrumartiges Umlaufen des Gliederförderers verunmöglichen würde. Andere Formen des Ineinandergreifens einander nachfolgender Gliederelemente 8 ist ebenfalls möglich. Durch das Überlappen der Gliederelemente 6 bilden sich auch in Kurven keine Löcher auf der Förderfläche.

### Bezugszeichenliste

- 2: Vorrichtung
- 4: Stückgut
- 6: Gliederförderer
- 8: Gliederelemente
- 10: Abschiebelemente
- 12: Antriebelemente
- 14: Steuereinrichtung
- 16: Bandbewegungslinie
- 18: Förderfläche
- 20: Abschieblinie
- 22: Seite des Gliederelements
- 24: Endstelle

## Patentansprüche

1. Vorrichtung (2) zum Fördern und Sortieren von Stückgütern (4), umfassend einen Gliederförderer (6), welcher Gliederelemente (8), Abschiebelemente (10) und Antriebelemente (12) aufweist, und eine Steuereinrichtung (14), wobei
a) der Gliederförderer (6) ausgestaltet ist, entlang einer Bandbewegungslinie (16) zu laufen und entlang der Bandbewegungslinie (16) einander nachfolgend angeordnete, eine Förderfläche (18) für die Stückgüter (4) ausbildende Gliederelemente (8) aufweist;
b) jeweils ein Abschiebelement (10) auf einem der Gliederelemente (8) oberhalb der Förderfläche (18) anordenbar ist, so dass das Abschiebelement (10) gemeinsam mit dem Gliederelement (8) entlang der Bandbewegungslinie (16) läuft, und dieses Abschiebelement (10) entlang einer Abschieblinie (20), welche auf dem Gliederelement (8) in einem Winkel, insbesondere im Wesentlichen quer zur Bandbewegungslinie (16) zwischen einer ersten und einer zweiten Seite (22a, 22b) des Gliederelements (8) angeordnet ist, bewegbar und anhaltbar ist;
c) die Antriebelemente (12) ausgestaltet sind, jeweils ein oder mehrere Abschiebelemente (10) individuell anzutreiben, wobei mindestens zwei entlang der Bandbewegungslinie (16) einander nachfolgend angeordnete Abschiebelemente (10) von unterschiedlichen Antriebelementen (12) antreibbar sind, so dass Bewegen und Anhalten dieser einander nachfolgend angeordneten Abschiebelemente (10) voneinander unabhängig ist;
d) die Steuereinrichtung (14) ausgestaltet ist zur Ansteuerung des Laufens des Gliederförderers (6) und der Antriebelemente (12).

2. Vorrichtung (2) nach Anspruch 1, **dadurch gekennzeichnet, dass**
die Gliederelemente (8) auf einer zwischen ihrer ersten und zweiten Seite (22a, 22b), vorzugsweise im Wesentlichen mittig, angeordneten Führungsschiene oder seitlich auf zwei entlang der Bandbewegungsrichtung angeordneten Führungsschienen gelagert sind.

3. Vorrichtung (2) nach einem der Ansprüche 1 bis 2, **dadurch gekennzeichnet, dass**
einander nachfolgend angeordnete Gliederelemente (8) hintereinander angeordnet und/oder gleitend einander überlappend, insbesondere schäftungsartig, und/oder ineinander greifend ausgestaltet sind.

4. Vorrichtung (2) nach einem der Ansprüche 1 bis 3, **dadurch gekennzeichnet, dass**
die Abschiebelemente (10) und die Gliederelemente (8) ausgestaltet sind nutenführungsartig und/oder umgriffführungsartig ineinander zu greifen.

5. Vorrichtung (2) nach einem der Ansprüche 1 bis 4, **dadurch gekennzeichnet, dass**
die Abschiebelemente (10) auf Höhe oder unterhalb der Förderfläche (18) absenkbar ausgestaltet sind.

6. Vorrichtung (2) nach einem der Ansprüche 1 bis 5, **dadurch gekennzeichnet, dass**
die Antriebelemente (12) als Linearantriebe ausgestaltet sind, vorzugsweise umfassend eine Spindel, die ausgestaltet ist bei ihrer Drehung das Abschiebelement (10) entlang der Abschieblinie (20) des Gliederelements (8) zu bewegen.

7. Vorrichtung (2) nach einem der Ansprüche 1 bis 6, **dadurch gekennzeichnet, dass**
die Abschiebelemente (10) arretierbar ausgestaltet sind.

8. Vorrichtung (2) nach einem der Ansprüche 1 bis 7, **dadurch gekennzeichnet, dass**
die Steuereinrichtung (14) ausgestaltet ist zur Ansteuerung der Vorrichtung (2), insbesondere der Abschiebelemente (10), in Antwort auf Position und Bewegung der Gliederelemente (8), der Abschiebelemente (10) und der Stückgüter (4).

9. Verfahren zum Fördern und Sortieren von Stückgütern (4) umfassend die Verfahrensschritte:
a) Auflage eines Stückguts (4) auf einem oder mehreren entlang einer Bandbewegungslinie (16) einander nachfolgend angeordneten, eine Förderfläche (18) für die Stückgüter (4) ausbildenden Gliederelementen (8) eines Gliederförderers (6), wobei auf jeweils einem Gliederelement (8) ein Abschiebelement (10) oberhalb der Förderfläche (18) anordenbar ist;
b) Laufen des Gliederförderers (6) entlang der Bandbewegungslinie (16);
c) individuell angesteuertes Bewegen und Anhalten eines oder mehrerer Abschiebelemente (10) entlang einer jeweiligen Abschieblinie (20), wobei die Abschieblinie (20) auf dem jeweiligen Gliederelement (8) in einem Winkel, insbesondere im Wesentlichen quer zur Bandbewegungslinie (16) zwischen einer ersten und zweiten Seite (22a, 22b) des Gliederelements (8) angeordnet ist und wobei mindestens zwei entlang der Bandbewegungslinie (16) einander nachfolgend angeordnete Abschiebelemente (10) voneinander unabhängig ansteuerbar sind.

10. Verfahren nach Anspruch 9, zudem umfassend die Verfahrensschritte
a) Erfassen von Position und/oder Form des Stückguts (4) auf der Förderfläche (18);
b) Ansteuern des Laufens des Gliederförderers (6) entlang der Bandbewegungslinie (16) und/oder des Bewegens und Anhaltens der Abschiebelemente (10) in Antwort auf die erfasste Position und/oder Form des Stückguts (4).

11. Verfahren nach einem der Ansprüche 9 bis 10, **dadurch gekennzeichnet, dass**
das Anhalten eines oder mehrerer Abschiebelemente (10) erfolgt, solange das Stückgut (4) noch auf dem oder den Gliederelementen (8) dieses oder dieser Abschiebelemente (10) aufliegt.

12. Verfahren nach einem der Ansprüche 9 bis 11, zudem umfassend den Verfahrensschritt
gegenläufiges Bewegen der Abschiebelemente (10) einander nachfolgend angeordneter Gliederelemente (8) hin zu einem auf diesen Gliederelementen (8) aufliegenden Stückgut (4) und Anhalten dieser Abschiebelemente (10), so dass ein Stückgut (4) von diesen Abschiebelementen (10) in seiner Bewegung eingeschränkt ist.

13. Verfahren nach einem der Ansprüche 9 bis 12, zudem umfassend den Verfahrensschritt
Bewegen eines Stückguts (4) entlang der Abschieblinie (20) durch ein oder mehrere Abschiebelemente (10).

14. Verfahren nach einem der Ansprüche 9 bis 13, zudem umfassend den Verfahrensschritt
Arretieren eines Abschiebelements (10).

15. Verfahren nach einem der Ansprüche 9 bis 14, zudem umfassend den Verfahrensschritt
Absenken eines Abschiebelements (10) auf Höhe oder unterhalb der Förderfläche (18).
